# EUROPEAN PATENT SPECIFICATION

(11) **EP 4 483 675 B1**
(45) Date of publication and mention of the grant of the patent: **01.10.2025**
(21) Application number: 23704372.4
(22) Date of filing: 16.02.2023
(51) Int. Cl.: H05B 45/357, H05B 45/59, F21K 9/27

(54) **DUAL TAPPED L2 SUPPLY CONFIGURATION FOR TLED LAMPS**
DOPPELZAPFEN-L2-VERSORGUNGSKONFIGURATION FÜR TLED-LAMPEN
CONFIGURATION D'ALIMENTATION L2 À DOUBLE PRISE POUR LAMPES TDEL

(30) Priority: 24.02.2022 WO PCT/CN2022/077607; 29.03.2022 EP 22165187
(43) Date of publication of application: 01.01.2025
(73) Proprietor: Signify Holding B.V., 5656 AE Eindhoven (NL)
(72) Inventor: VELDMAN, Paul, Robert, 5656 AE Eindhoven (NL); DE HEER GALISTEO, Raimundo, 5656 AE Eindhoven (NL); JIN, Gaoxian, 5656 AE Eindhoven (NL); LI, Siqi, 5656 AE Eindhoven (NL)
(74) Representative: Verweij, Petronella Daniëlle
(86) International application number: PCT/EP2023/053876
(87) International publication number: WO 2023/161116

(56) References cited:
- EP-A1- 3 562 271
- EP-A2- 2 381 159
- JP-B2- 5 503 164
- US-A1- 2014 192 526

## Description

### FIELD OF THE INVENTION

The invention relates to retrofit Light Emitting Diode, LED, lighting device.

### BACKGROUND OF THE INVENTION

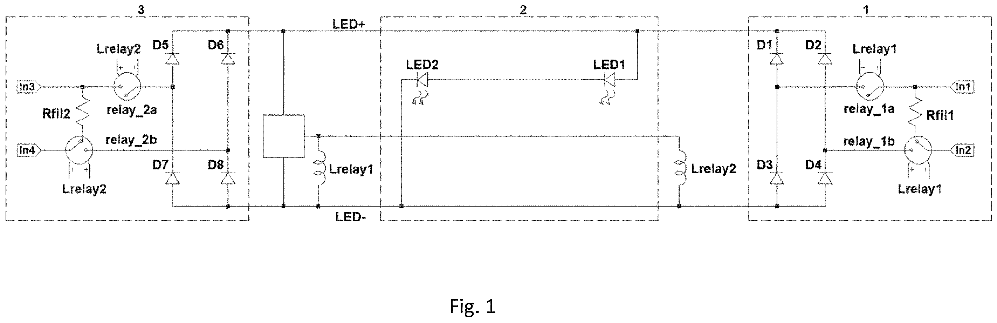

Fluorescent retrofittable light emitting diode (LED) lamps may comprise a relay on the driver board at either end of the lamp. The relay may for example provide a pin safety function that is used to prevent, during installation of the lamp in the socket, a voltage to be present from one end of the lamp to the other end of the lamp. The driving coil of each relay needs to be energized for the relay to be activated, e.g. closed for a normal-open relay. Figure 1 shows how currently the driving coils of the relays in fluorescent retrofittable LED lamps are powered. A buck converter is used to transform the voltage across the LEDs, LED+, to a lower voltage such that it conforms the voltage required for driving the driving coil. In this example, the buck converter is located at one end of the fluorescent retrofittable LED lamp and its output is routed via the LED board to the relay at a driver board at a second end of the fluorescent retrofittable LED lamp, thus requiring an additional connection, next to the positive supply LED+ and the negative supply LED-, between each of the driver boards 1, 3 and the LED board 2. In a fluorescent retrofittable LED lamp, the first driver board 1 is located on one end of the fluorescent retrofittable LED lamp, preferably in the first end, and the second driver 3 is located on the opposite end of the fluorescent retrofittable LED lamp, preferably in the second end.

Another major drawback of the use of a buck converter, or any kind of switched mode power supply, SMPS, is that the converter generally exhibits a negative differential input impedance at its input terminals. The input current increases as the input voltage decreases, which can create problems in distinct operating conditions as it may cause unintended oscillations.

EP 2381159 discloses a LED tube comprising a substantially fluorescent-tube-shaped and fluorescent-tube-sized translucent or fluorescent tube having one or more LED components and a current control unit installed therein. Both ends of the LED tube are provided with a pair of contact pin for connecting the LED tube mechanically and electrically to the tube holders of the fluorescent tube lighting fixture. The tube has a safety unit arranged to prevent a voltage from transferring through the tube from its one end to the other until the voltage supplied from the corresponding tube holder of the lighting fixture to the pair of contact pins has been detected at each end of the tube separately. Electric power or switching control of electric power is cross-connected between the ends of the LED tube.

It is therefore desired to provide a solution that is easier and more reliable.

### SUMMARY OF THE INVENTION

It is an objective of the invention to provide a retrofit Light Emitting Diode, LED, lighting device that provides a simple driving of the relay.

To provide this simple driving of the relay, in a first aspect of the invention a retrofittable Light Emitting Diode, LED, lighting device for connecting to a fluorescent ballast is provided wherein said retrofit LED lighting device comprises:
- a first end comprising a first power connection and a second power connection for receiving an output power from the fluorescent ballast and comprising a first relay, wherein the first power connection and the second power connection are coupled to a first single connector, wherein the first end is adapted to provide a first output and a second output;
- a second end comprising a third power connection and a fourth power connection for receiving an output power of the fluorescent ballast and comprising a second relay, wherein the third power connection and the fourth power connection are coupled to a second single connector, wherein the second end is adapted to provide a third output and a fourth output, wherein the first output is coupled to the third output and the second output is coupled to the fourth output;
- a light emitting diode, LED, load comprising:
   - a first set of one or more LEDs coupled to the first output; and
   - a second set of one or more LEDs coupled to the second output, wherein the first set of one or more LEDs and the second set of one or more LEDs are coupled in series; wherein the retrofit LED lighting device further comprises:
      - the first relay comprising a first relay switch and a first driving coil circuit, wherein the first relay switch is in a series connection between the first power connection or the second power connection and the LED load; and
      - the second relay comprising a third relay switch and a second driving coil circuit, wherein the second relay switch is coupled between the third power connection (in3) or the fourth power connection and the LED load,
      wherein the first driving coil circuit is electrically coupled across the first set of one or more LEDs and the second driving coil circuit is electrically coupled across the second set of one or more LEDs.

The first relay is preferably positioned in the first end, where most space is available for a relay. The first end receives an input power from the fluorescent ballast via a first single connector. From the first end, a first output and a second output are provided to at least a first set of one or more LEDs and a second set of series LEDs. The driving coil of the first relay is coupled across the first set of one or more LEDs. This means that the driving coil is coupled to the first output and a corresponding other node of the first set of one or more LEDs such that the driving coil is effectively in parallel with the first set of one or more LEDs.

The retrofit LED lighting device has a second end. The retrofit LED lighting device may then be an elongated lighting tube having two opposite ends where the corresponding first and second ends are located. Additionally, a second relay is provided that is used to switch the third power connection or the fourth power connection to the LED load. The driving coil of the second relay is coupled in a similar fashion as the driving coil of the first relay: the driving coil of the first relay is electrically coupled across the first set of one or more LEDs and the driving coil of the second relay is electrically coupled across the second set of one or more LEDs. The two driving coils are effectively coupled in series with each other and in parallel to different LEDs. This retrofit LED lighting device allows a simple drive of the relays being realized without having a large impact on the light output.

This retrofit LED lighting device provides a simple and reliable way of providing a small current to the driving coil for a relay that is used in the retrofit LED lighting device. In addition, because a switched mode power supply is not required for powering the driving coil, the effect of the negative differential impedance at the input terminals of the switched mode power supply is also not present.

In a further example, the first driving coil circuit comprises a parallel combination of a first capacitor and a first resistor.

The introduction of the parallel combination of the first capacitor and the first resistor allows a high drive current, via the first capacitor, to be provided to the driving coil during the closing of the relay and a weaker drive current, via the first resistor, to be provided to the driving coil once the relay is closed.

In a further example, a forward voltage of the first set of one or more LEDs is matched with a required driving voltage of the first driving coil circuit by providing an amount of series coupled LEDs of the LEDs of the first set of one or more LEDs to provide a forward voltage being equal to or larger than the required driving voltage of the first driving coil circuit.

When the forward voltage of the LEDs to which the driving coil circuit is placed in parallel is equal to or larger than the drive voltage of the driving coil circuit, the relay switch can close properly. Preferably, the LED forward voltage is selected to be slightly above the required drive voltage so that the LED forward voltage approximates the drive voltage.

In a further example, a rectifier circuit is coupled between the first power connection and the second power connection and the first output and the second output.

Providing the rectifier circuit between the first power connection, the second power connection, the first output and the second output allows the alternating current, AC, input to be rectified and allow a simple control of the current through the LED load preferably a current limiter which can be placed in series with the LED load if e.g. dimming is required. The rectifier circuit provides a first power connection that may provide a first positive voltage to the LED load and a second power connection that provides a return path.

In a further example, the first relay switch is coupled between the first power connection or the second power connection and the rectifier circuit.

Coupling the first relay switch in the path between the first end and the input of the rectifier circuit allows the first relay to disconnect the retrofit LED lighting device completely from the ballast. The relay switch can be placed such that no components can provide a leakage path between the first power connection and the second power connection, which may otherwise lead to losses when the retrofit LED lighting device is in stand-by, which may mean that the retrofit LED lighting device does not generate light.

In a further example, the first relay comprises a second relay switch, wherein the first relay switch is coupled between the first power connection and the rectifier circuit and the second relay switch is coupled between the second power connection and the rectifier circuit.

The relay can be a relay that has two relay switches that are controlled by the same driving coil. The relay can then be used to completely disconnect the LED load from the first power connection and the second power connection. The relay with two relay switches can also provide further benefits such as automatically switching between a pin safety function and a filament emulation function. This function will be described in more details in the detailed description.

In another example, the retrofit LED lighting device further comprises:
- a second end comprising a third power connection and a fourth power connection for receiving an output power of the fluorescent ballast and comprising a second relay, wherein the third power connection and the fourth power connection are coupled to a second single connector, wherein the second end is adapted to provide the third output and the fourth output, wherein the first output is coupled to the third output and the second output is coupled to the fourth output; and
- a second relay comprising a third relay switch and a second driving coil circuit, wherein the second relay switch is coupled between the third power connection and the rectifier circuit or between the fourth power connection and the LED load;
wherein the first driving coil circuit is electrically coupled across the first set of one or more LEDs and the second driving coil circuit is electrically coupled across the second set of one or more LEDs.

In another example, the second driving coil circuit comprises a parallel combination of a second capacitor and a second resistor.

Similar as explained for the first driving coil, the introduction of the parallel combination of the second capacitor and the second resistor allows a high drive current, via the second capacitor, to be provided to the driving coil of the second relay during the closing of the second relay and a weaker drive current, via the second resistor, to be provided to the driving coil once the second relay is closed.

In another example, a forward voltage of the first set of one or more LEDs is matched with a driving voltage of the first driving coil circuit by providing an amount of LEDs of the first set of one or more LEDs to provide a forward voltage being equal to or larger than the driving voltage of the first driving coil circuit and wherein a forward voltage of the second set of one or more LEDs is matched with a driving voltage of the second driving coil circuit by providing an amount of LEDs of the second set of one or more LEDs to provide a forward voltage being equal to or larger than the driving voltage of the second driving coil circuit.

The forward voltage of the first set of one or more LEDs is matched with a driving voltage of the first driving coil of the first relay. The forward voltage of the second set of one or more LEDs is matched with a driving voltage of the second driving coil of the second relay. This allows the first relay and the second relay to be closed properly. Preferably, the LED forward voltage of the first set of one or more LEDs and the forward voltage of the second set of one or more LEDs is selected to be slightly above the required drive voltage of the respective first relay coil and second relay coil so that the LED forward voltages approximate the drive voltages.

In another example, the first relay switch and the third relay switch are closed upon detection of a presence of a voltage and/or current at the first end and at the second end.

A function of the relays is pin safety. Relays may be used as a safety device since they have an internal creepage that may provide electric safety. The relay switches are connected electrically between the first end of the retrofit LED lighting device and the second end. This means that the relay may be used to prevent a voltage on one end to be present at the other end. Preferably, two relays are used to provide a redundancy for safety.

In another example, the first relay comprises a second relay switch, wherein the first relay switch is coupled between the first power connection and the LED load and the second relay switch is coupled between the second power connection and the LED load and wherein the second relay comprises a fourth relay switch, wherein the third relay switch is coupled between the third power connection and the LED load and the fourth relay switch is coupled between the fourth power connection and the LED load.

Both relays can be relays that have two relay switches that are controlled by the same corresponding driving coil. The relays can then be used to completely disconnect the LED load from the first power connection, the second power connection, the third power connection and the fourth power connection. The relay with two relay switches can also provide further benefits such as automatically switching between a pin safety function and a filament emulation function. This function will be described in more details in the detailed description.

In another example, the first relay switch is adapted to be closed when a proper insertion of the retrofit LED lighting device in a retrofittable luminaire is detected.

In another example, the first set of one or more LEDs and/or the second set of one or more LEDs are evenly distributed between the first end and the second end.

The first set of one or more LEDs and/or the second set of one or more LEDs may suffer from a reduced light output because of the diverted current to the driving coils. Distributing the LEDs over the length of the retrofit LED lighting device i.e. between the two ends, the effect can be mitigated since there will be no difference, or dark spots, in light visible over the length of the retrofit LED lighting device since the overall light output of the retrofit LED lighting device.

In another example, the retrofit LED lighting device comprises a third set of one or more LEDs coupled between the first set of one or more LEDs and the second set of one or more LEDs, wherein an LED density of the first set of one or more LEDs is higher than an LED density of the third set of one or more LEDs and/or an LED density of the second set of one or more LEDs is higher than an LED density of the third set of one or more LEDs.

The first set of series coupled LEDs and/or the second set of series coupled LEDs may suffer from a reduced light output because of the diverted current to the driving coils. When a third set of series coupled LEDs is not suffering from a diverted current through the driving coil, there will be a discrepancy of light output between the first set of series coupled LEDs and/or the second set of series coupled LEDs and the third set of series coupled LEDs. The LEDs that emit the least light can be placed closer together as to increase the LED density. This difference in density between allows the first set of series coupled LEDs and/or the second set of series coupled LEDs and the third set of series coupled LEDs allows an even light distribution along the entire length of the retrofit LED lighting device i.e. between the two ends.

### BRIEF DESCRIPTION OF THE DRAWINGS

Examples of the invention will now be described with reference to the accompanying drawings, in which:
Fig. 1 shows an example of a circuit diagram of a commonly known fluorescent retrofittable LED lamp;
Fig. 2 shows an example of a circuit diagram of a fluorescent retrofittable LED lamp according to the invention;
Fig. 3 shows a further example of a circuit diagram of a fluorescent retrofittable LED lamp according to the invention;
Fig. 4 shows an example of the connections between the LED load and the driving coils of the relays according to the invention;
Fig. 5 shows a further example of the connections between the LED load and the driving coils of the relays according to the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should also be understood that the Figures are merely schematic and are not drawn to scale. It should also be understood that the same reference numerals are used throughout the Figures to indicate the same or similar parts.

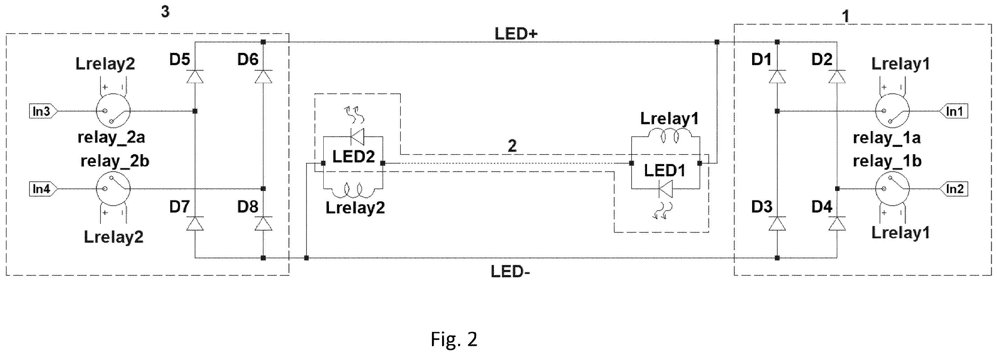

Figure 2 show an example of a circuit diagram of a fluorescent retrofittable LED lamp. The fluorescent retrofittable LED lamp may be connected to a fluorescent ballast. The ballast may be any type of commonly used ballast, such as an electromagnetic ballast or a high frequency ballast. The fluorescent retrofittable LED lamp has a first end 1 and a second end 3 located at a respective first end and second end of the fluorescent retrofittable LED lamp. The ends are at opposite ends of the fluorescent retrofittable LED lamp. Each end has a single connector allowing the fluorescent retrofittable LED lamp to be inserted in a conventional fluorescent troffer. A single connector may be a bi-pin connector such as used by fluorescent tubes to fit into a tombstone style lamp holder. By the introduction of electronics, instead of a gas which can discharge, inside the fluorescent retrofittable LED lamp providing an electric connection between the first end 1 and the second end 3, a voltage that is present at one single connector may also be available at the other single connector. This may cause a hazardous situation for an installer of the fluorescent retrofittable LED lamp into the troffer because the installer may be able to touch the single connector that is not inserted yet and be exposed to a potential hazardous voltage. A pin safety circuit is in this situation provided and allows an interruption of the electric connection between the two ends. This may be normally done using a relay because a relay is considered a safety device, the relay is placed in the electric connection between the two ends. The relay switch is in an open position when the fluorescent retrofittable LED lamp is not powered. When the fluorescent retrofittable LED lamp is inserted, the relay will only close when both ends are inserted properly into the troffer, such that the installer cannot reach any of the Pins.

In the example provided, the first relay Relay1 has a first relay switch relay_1a and a second relay switch relay_1b that are controlled via driving coil Lrelay1. In this example, the second relay relay2 has a third relay switch relay_2a and a fourth relay switch relay_2b that are controlled via driving coil Lrelay2. In the example provided, the switches of first relay Relay 1 and second relay Relay2 are both placed in the electric connection between the two ends.

The first end 1 may have a first power connection in1 and a second power connection in2. At these inputs, an output of the fluorescent ballast may be connected. The first relay Relay1 may be comprised in the first end 1. The first power connection in1 and the second power connection in2 are coupled to the first single connector.

The fluorescent retrofittable LED lamp may have a second end 3 that may have a third power connection in3 and a fourth power connection in4. At these inputs, another output of the fluorescent ballast may be connected. The second relay relay2 may be comprised in the second end 2.

The fluorescent retrofittable LED lamp has a light emitting diode, LED, load 2. The LED load 2 has a first set of one or more LEDs LED1. This first set of one or more LEDs LED1 may comprise one LED or multiple LEDs arranged in a series and/or parallel combination. Preferably, the LEDs have the same color output.

Across the first set of one or more LEDs LED1, the first driving coil circuit Lrelay1 is connected. In this example, the first driving coil circuit Lrelay1 is the first driving coil Lrelay1. The voltage across the first set of one or more LEDs LED1 is therefore also present across the first driving coil Lrelay1. If the voltage across the first set of one or more LEDs LED1 exceeds the voltage needed for driving the first driving coil Lrelay1, the first relay Relay1 can be operated reliably. It is therefore desired that the forward voltage of the first set of one or more LEDs LED1 is matched with the voltage required for reliably operating the first driving coil Lrelay1. This matching is done by providing in the first set of one or more LEDs LED1 a series connection of LEDs that provide a forward voltage equal to or larger than the required driving voltage of the first driving coil Lrelay1. Preferably, when the forward voltage is larger than the required driving voltage of the first driving coil Lrelay1, the forward voltage is kept close to the required driving voltage to prevent additional power losses. In the example provided, a relay may be chosen that requires a driving voltage that is equal to the forward voltage of a single LED. Alternatively, the required driving voltage may correspond to an integer amount of series connected LEDs. In this situation, the amount of LEDs in series may provide a forward voltage that is equal to or larger than the required driving voltage of the first driving coil Lrelay1.

A rectifier circuit may be provided to provide a rectified voltage to the LED load 2. The rectifier circuit may be part of the first end 1. The rectifier circuit is coupled between the first power connection in1 and the second power connection in2 and the first output LED+ and the second output LED-. The rectifier receives an alternating current, AC, voltage and rectifies this voltage to a direct current, DC, voltage which is represented in the figure as the first output LED+ and the second output LED-. The relay may start up by having a power source not shown in the figure to power the first driving coil Lrelay1 such that the first relay switch relay_1 is closed. A power will then flow to the LED load 2 and the first driving coil Lrelay1. Such a start-up maybe provided for example be an energy storage such as a battery or a capacitive coupling between the ends, allowing a small amount of power to be harvested for powering the first driving coil Lrelay1.

Optionally, the retrofittable LED lighting device as shown in Figure 2 may have a second relay Relay2. An additional rectifier circuit is provided that is coupled between the third power connection in3 and the fourth power connection in4 and the first output LED+ and the second output LED-. The second relay Relay2 may be part of the second end. The LED load 2 has a second set of one or more LEDs LED2. Across the second set of one or more LEDs, the second driving coil circuit Lrelay2 is connected. In this example, the second driving coil circuit Lrelay2 is the second driving coil Lrelay2.

If the voltage across the second set of one or more LEDs LED2 exceeds the voltage needed for driving the second driving coil Lrelay2, the second relay Relay2 can be operated reliably. It is therefore desired that the forward voltage of the second set of one or more LEDs LED2 is matched with the voltage required for reliably operating the second driving coil Lrelay2. This matching is done by providing in the second set of one or more LEDs LED2 a series connection of LEDs that provide a forward voltage equal to or larger than the required driving voltage of the second driving coil Lrelay2. Preferably, when the forward voltage is larger than the required driving voltage of the second driving coil Lrelay2, the forward voltage is kept close to the required driving voltage to prevent additional power losses. In the example provided, a relay may be chosen that requires a driving voltage that is equal to the forward voltage of a single LED. Alternatively, the required driving voltage may correspond to an integer amount of series connected LEDs. In this situation, the amount of LEDs in series may provide a forward voltage that is equal to or larger than the required driving voltage of the second driving coil Lrelay2.

In the example provided, the first relay Relay 1 and/or the second relay Relay2 are placed such that they can provide a pin safety functionality. The first relay Relay 1 and/or the second relay Relay2 may then only close when a voltage is present at the first end 1 and the second end 3. This means that the retrofittable LED lighting device has been inserted properly in the housing e.g. troffer.

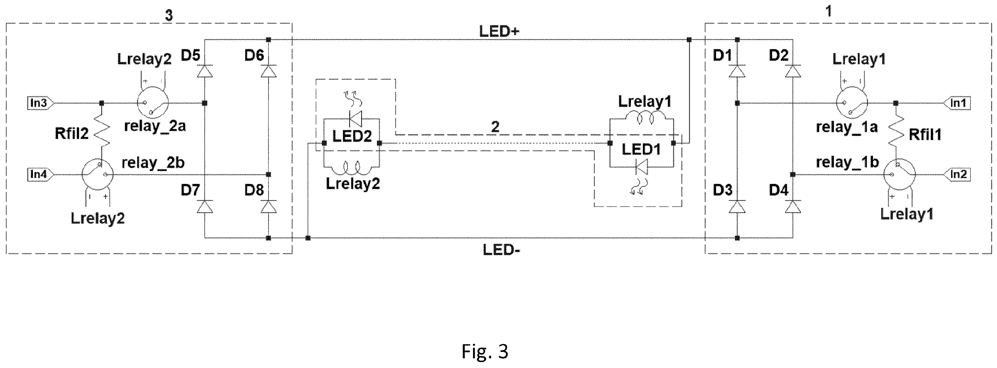

In figure 3, a further example of a retrofittable LED lighting device is provided. The relay switches are located similarly as in the example of Figure 3, in the AC path. The first relay switch relay_1a may be a single throw (normally-open) switch or the normally-open switch of a double throw relay. The second relay switch relay_1b may be a double throw (change-over) switch. The first relay switch relay_1a may be used to close upon the detection of a proper insertion of the retrofittable LED lighting device in the troffer and may therefore be used for the pin-safety functionality. The second relay switch relay_1b may be used for two functions. In the non-activated state, the second relay switch relay_1b is used to couple a first filament element Rfil1 to the second power connection in2, via its normally closed contact. The first filament element Rfil1 is further connected to the first power connection in1. In this non-activated state, the second relay switch relay_1b provides a filament emulation function, allowing the fluorescent ballast to detect a filament impedance presence at the first end 1. When the second relay switch relay_1b enters the activated state, the first filament element Rfil1 is disconnected from the second power connection in2. In the activated state, the second relay switch relay_1b connects the second power connection in2 to an input of the rectifier circuit, via its normally open contact. The second relay switch relay_1b closes simultaneously with the first relay switch relay_1a, providing an optimized pin safety functionality.

The second relay may be a similar type as the first relay. In this example, the third relay switch relay_2a may be a single throw (normally-open) switch or the normally-open switch of a double throw relay. The fourth relay switch relay_2b may be a double throw (change-over) switch. The third relay switch relay_2a may be used to close upon the detection of a proper insertion of the retrofittable LED lighting device in the troffer and may therefore be used for the pin-safety functionality. The fourth relay switch relay_2b may be used for two functions. In the normally open state, the fourth relay switch relay_2b is used to couple a second filament element Rfil2 to the fourth power connection in4, via its normally closed contact. The second filament element Rfil2 is further connected to the third power connection in3. In the non-activated state of the second relay, the fourth relay switch relay_2b provides a filament emulation function, allowing the fluorescent ballast to detect a filament impedance presence at the second end 3. When the fourth relay switch relay_2b enters the activated state, the second filament element Rfil2 is disconnected from the fourth power connection in4.and connects the fourth power connection in4 to an input of the rectifier circuit, via its normally open contact. The fourth relay switch relay_2b closes simultaneously with the third relay switch relay_2a, providing an optimized pin safety functionality. Preferably, the first relay and the second relay switch both switch simultaneously.

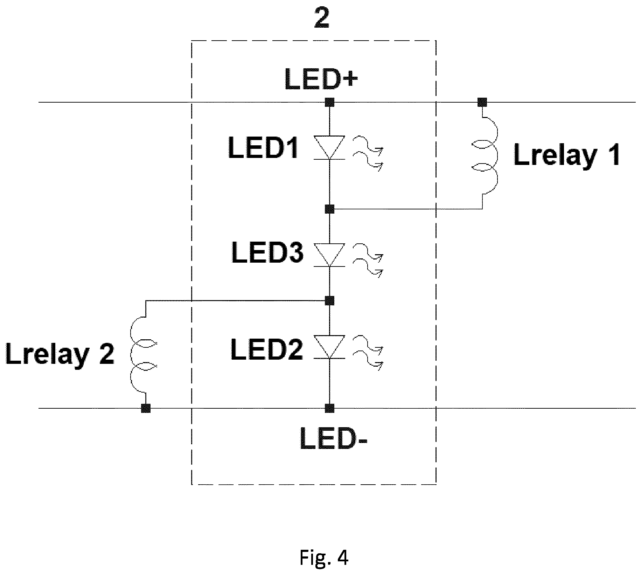

Figure 4 shows an example of the LED load 2. The LED load 2 may have the first set of one or more LEDs LED1 coupled to the first output and the second set of one or more LEDs LED2 coupled to the second output. A third set of one or more LEDs LED3 may be coupled in between the first set of one or more LEDs LED1 and the second set of one or more LEDs LED2. Across the third set of one or more LEDs LED3, no driving coil is connected.

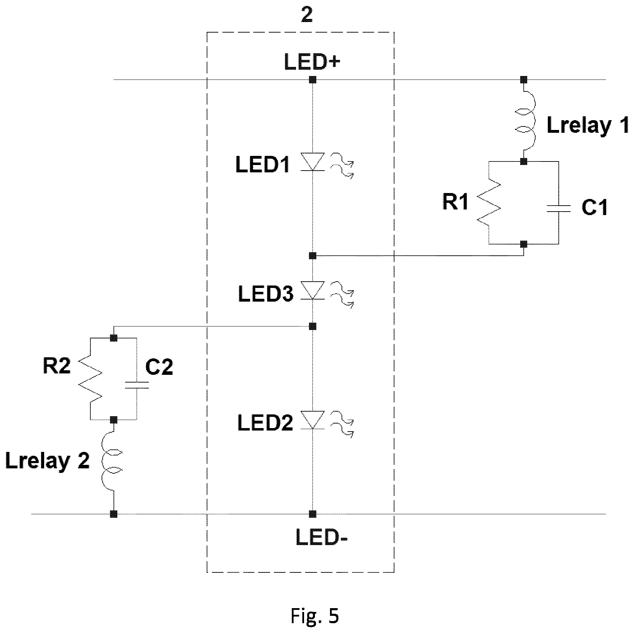

Figure 5 shows another example of the LED load 2. Across the first set of one or more LEDs LED1, the first driving coil circuit is connected. Across the second set of one or more LEDs LED2, the second driving coil circuit is connected. In the example, the first driving coil circuit has the first driving coil Lrelay1 in series with a parallel combination of a first resistor R1 and a first capacitor C1. The second driving coil circuit has the second driving coil Lrelay2 in series with a parallel combination of a second resistor R2 and a second capacitor C2. The capacitor combined with the resistor is used to provide an AC path for the driving coil current to flow. This is especially useful during the closing of the relay switch when a larger current is required. When the relay switch has switched, less current is needed and the current through the driving coil stabilizes. This means that only current via the resistor is provided to the driving coil.

In the examples provided, the LED load is directly coupled to the bus voltage LED+ and LED-. Alternatively, the LEDS may be powered by an SMPS, which uses the bus voltage LED+ and converts it into a current suitable for powering the LED load. Instead of an SMPS, a linear current regulator can be placed in series with the LED load. The linear current regulator may then regulate the current through the LED load. When coupled to a high frequency fluorescent ballast, the retrofit LED lighting device may not need an SMPS.

In the examples provided, the relays may be relays that need to remain the driving coil powered to maintain a position of the relay switch. The moment the driving coil is not powered, the relay switch returns to its starting position. Another example of a relay may be a latching relay. When the driving coil is powered, the relay switches changes position and remains at this position. When the driving coil is not powered anymore, the relay switch still remains in its last position. In the example of a latching relay, additional circuitry can be provided in the driving coil circuit to enable the proper control of the driving coil.

In the example provided, the sets of one or more LEDs are all coupled in series electrically. This however does not limit to the distribution of the LEDs across the printed circuit board, PCB, on which the LEDs are mounted. Because some current may be diverted from the first set of one or more LEDs LED1 and/or the second set of one or more LEDs LED2, these LEDs will provide a lower light output. The LEDs of the first set of one or more LEDs LED1 and/or the second set of one or more LEDs LED may be distributed evenly between the first end 1 and the second end 3. This allows the reduced light output of the LEDs to be evenly distributed among the length of the retrofittable LED lighting device. A user may then perceive no difference in light output.

Another option is to change the LED density of the first set of one or more LEDs LED1 and/or the LED density of the second set of one or more LEDs LED2 with respect to the third set of one or more LEDs LED3. The LED density of the first set of one or more LEDs LED1 and/or the LED density of the second set of one or more LEDs LED2 is higher than the LED density of the third set of one or more LEDs LED3. The increase of the LED density provides a compensation for the reduced light output of the LEDs. The user will then less easily perceive difference in light intensity between the sets of one or more LEDs.

Preferably, the first driving coil circuit Lrelay1 is electrically coupled in parallel to the first set of one or more LEDs LED1 and the second driving coil circuit Lrelay2 is electrically coupled in parallel to the second set of one or more LEDs LED2. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A retrofit Light Emitting Diode, LED, lighting device for connecting to a fluorescent ballast, wherein the retrofit LED lighting device comprises:
- a first end (1) comprising a first power connection (in1) and a second power connection (in2) configured for receiving an output power from the fluorescent ballast and comprising a first relay (Relay 1), wherein the first power connection (in1) and the second power connection (in2) are coupled to a first single connector, wherein the first end (1) is adapted to provide a first output (LED+) and a second output (LED-);
- a second end (3) comprising a third power connection (in3) and a fourth power connection (in4) for receiving an output power of the fluorescent ballast and comprising a second relay (Relay2), wherein the third power connection (in3) and the fourth power connection (in4) are coupled to a second single connector, wherein the second end (3) is adapted to provide a third output (LED+) and a fourth output (LED-), wherein the first output (LED+) is coupled to the third output (LED+) and the second output (LED-) is coupled to the fourth output (LED-);
- a light emitting diode, LED, load (2) comprising:
- a first set of one or more LEDs (LED1) coupled to the first output (LED+); and
- a second set of one or more LEDs (LED2) coupled to the second output (LED-), wherein the first set of one or more LEDs (LED1) and the second set of one or more LEDs (LED2) are coupled in series;
**characterized in that** the retrofit LED lighting device further comprises:
- the first relay (Relay1) comprising a first relay switch (relay_1a, relay_1b)) and a first driving coil circuit (Lrelay1), wherein the first relay switch (relay_1a, relay_1b) is coupled between the first power connection (in1) or the second power connection (in2) and the LED load (2), and
- the second relay (Relay2) comprising a third relay switch (relay_2a, relay_2b) and a second driving coil circuit (Lrelay2), wherein the third relay switch (relay_2a, relay_2b) is coupled between the third power connection (in3) or the fourth power connection (in4) and the LED load (2),
wherein the first driving coil circuit (Lrelay1) is electrically coupled in parallel to the first set of one or more LEDs (LED1) and the second driving coil circuit (Lrelay2) is electrically coupled in parallel to the second set of one or more LEDs (LED2).

2. The retrofittable LED lighting device according to claim 1, wherein the first driving coil circuit (Lrelay 1) comprises a parallel combination of a first capacitor (C1) and a first resistor (R1).

3. The retrofittable LED lighting device according to any of the preceding claims, wherein a forward voltage of the first set of one or more LEDs (LED1) is matched with a required driving voltage of the first driving coil circuit (Lrelay 1) by providing an amount of series coupled LEDs of the LEDs of the first set of one or more LEDs (LED1) to provide a forward voltage being equal to or larger than the required driving voltage of the first driving coil circuit (Lrelay1).

4. The retrofittable LED lighting device according to any of the preceding claims, comprising a rectifier circuit coupled between the first power connection (in1) and the second power connection (in2) and the first output (LED+) and the second output (LED-).

5. The retrofittable LED lighting device according to claim 4, wherein the first relay switch (relay_1a, relay_1b) ) is coupled between the first power connection (in1) and the rectifier circuit or between the second power connection (in2) and the rectifier circuit.

6. The retrofittable LED lighting device according to any of the preceding claims, wherein the first relay (Relay1) comprises a second relay switch (relay_1b), wherein the first relay switch (relay_1a) ) is coupled between the first power connection (in1) and the rectifier circuit and the second relay switch (relay_1b) is coupled between the second power connection (in2) and the rectifier circuit.

7. The retrofittable LED lighting device according to any of the preceding claims, wherein the second driving coil circuit (Lrelay2) comprises a parallel combination of a second capacitor (C2) and a second resistor (R2).

8. The retrofittable LED lighting device according to any of the preceding claims, wherein a forward voltage of the first set of one or more LEDs (LED1) is matched with a driving voltage of the first driving coil circuit (Lrelay1) by providing an amount of LEDs of the first set of one or more LEDs (LED1) to provide a forward voltage being equal to or larger than the driving voltage of the first driving coil circuit (Lrelay1) and wherein a forward voltage of the second set of one or more LEDs (LED2) is matched with a driving voltage of the second driving coil circuit (Lrelay2) by providing an amount of LEDs of the second set of one or more LEDs (LED2) to provide a forward voltage being equal to or larger than the driving voltage of the second driving coil circuit (Lrelay2).

9. The retrofittable LED lighting device according to any of the preceding claims, wherein the first relay switch (relay_1a) and the third relay switch (relay_2a) are closed upon detection of a presence of a voltage and/or current at the first end and at the second end.

10. The retrofittable LED lighting device according to any of the preceding claims, wherein the first relay (Relay1) comprises a second relay switch (relay_1b), wherein the first relay switch (relay_1a) ) is coupled between the first power connection (in1) and the LED load (2) and the second relay switch (relay_1b) is coupled between the second power connection (in2) and the LED load (2) and wherein the second relay (Relay2) comprises a fourth relay switch (relay_2b), wherein the third relay switch (relay_2a) is coupled between the third power connection (in3) and the LED load (2) and the fourth relay switch (relay_2b) is coupled between the fourth power connection (in4) and the LED load (2).

11. The retrofittable LED lighting device according to any of the preceding claims, wherein the first relay switch (relay_1a, relay_1b) ) is adapted to be closed when a proper insertion of the retrofit LED lighting device in a retrofittable luminaire is detected.

12. The retrofittable LED lighting device according to any of the preceding claims, wherein the first set of one or more LEDs (LED1) and/or the second set of one or more LEDs (Led2) are evenly distributed between the first end (1) and the second end (3).

13. The retrofittable LED lighting device according to any of the preceding claims, further comprising a third set of one or more LEDs (LED3) coupled between the first set of one or more LEDs (LED1) and the second set of one or more LEDs (LED2), wherein an LED density of the first set of one or more LEDs (LED1) is higher than an LED density of the third set of one or more LEDs (LED3) and/or an LED density of the second set of one or more LEDs (LED2)is higher than an LED density of the third set of one or more LEDs (LED3).

## Patentansprüche

1. Nachrüstungsleuchtdiodenbeleuchtungsvorrichtung, LED-Beleuchtungsvorrichtung, zum Verbinden mit einem fluoreszierenden Vorschaltgerät, wobei die Nachrüstungs-LED-Beleuchtungsvorrichtung umfasst:
- ein erstes Ende (1), umfassend eine erste Leistungsverbindung (in1) und eine zweite Leistungsverbindung (in2), die zum Empfangen einer Ausgangsleistung von dem fluoreszierenden Vorschaltgerät konfiguriert sind und umfassend ein erstes Relais (Relais1), wobei die erste Leistungsverbindung (in1) und die zweite Leistungsverbindung (in2) mit einem ersten Einzelverbinder gekoppelt sind, wobei das erste Ende (1) angepasst ist, um einen ersten Ausgang (LED+) und einen zweiten Ausgang (LED-) bereitzustellen;
- ein zweites Ende (3), umfassend eine dritte Leistungsverbindung (in3) und eine vierte Leistungsverbindung (in4) zum Empfangen einer Ausgangsleistung des fluoreszierenden Vorschaltgeräts und umfassend ein zweites Relais (Relais2), wobei die dritte Leistungsverbindung (in3) und die vierte Leistungsverbindung (in4) mit einem zweiten Einzelverbinder gekoppelt sind, wobei das zweite Ende (3) angepasst ist, um einen dritten Ausgang (LED+) und einen vierten Ausgang (LED-) bereitzustellen, wobei der erste Ausgang (LED+) mit dem dritten Ausgang (LED+) gekoppelt ist und der zweite Ausgang (LED-) mit dem vierten Ausgang (LED-) gekoppelt ist;
- eine Leuchtdioden-Last, LED-Last, (2), umfassend:
- einen ersten Satz von einer oder mehreren LEDs (LED1), der mit dem ersten Ausgang (LED+) gekoppelt ist; und
- einen zweiten Satz von einer oder mehreren LEDs (LED2), der mit dem zweiten Ausgang (LED-) gekoppelt ist, wobei der erste Satz von einer oder mehreren LEDs (LED1) und der zweite Satz von einer oder mehreren LEDs (LED2) in Reihe gekoppelt sind;
**dadurch gekennzeichnet, dass** die Nachrüstungs-LED-Beleuchtungsvorrichtung ferner umfasst:
- das erste Relais (Relais1), umfassend einen ersten Relaisschalter (Relais_1a, Relais_1b) und eine erste Treiberspulenschaltung (LRelais1), wobei der erste Relaisschalter (Relais_1a, Relais_1b) zwischen der ersten Leistungsverbindung (in1) oder der zweiten Leistungsverbindung (in2) und der LED-Last (2) gekoppelt ist, und
- das zweite Relais (Relais2), umfassend einen dritten Relaisschalter (Relais_2a, Relais_2b) und eine zweite Treiberspulenschaltung (LRelais2), wobei der dritte Relaisschalter (Relais_2a, Relais_2b) zwischen der dritten Leistungsverbindung (in3) oder der vierten Leistungsverbindung (in4) und der LED-Last (2) gekoppelt ist,
wobei die erste Treiberspulenschaltung (LRelais1) elektrisch parallel mit dem ersten Satz von einer oder mehreren LEDs (LED1) gekoppelt ist und die zweite Treiberspulenschaltung (LRelais2) elektrisch parallel mit dem zweiten Satz von einer oder mehreren LEDs (LED2) gekoppelt ist.

2. Nachrüstbare LED-Beleuchtungsvorrichtung nach Anspruch 1, wobei die erste Treiberspulenschaltung (LRelais1) eine Parallelkombination aus einem ersten Kondensator (C1) und einem ersten Widerstand (R1) umfasst.

3. Nachrüstbare LED-Beleuchtungsvorrichtung nach einem der vorstehenden Ansprüche, wobei eine Durchlassspannung des ersten Satzes von einer oder mehreren LEDs (LED1) an eine erforderliche Treiberspannung der ersten Treiberspulenschaltung (LRelais1) angepasst wird, indem eine Anzahl von in Reihe gekoppelten LEDs der LEDs des ersten Satzes von einer oder mehreren LEDs (LED1) bereitgestellt wird, um eine Durchlassspannung bereitzustellen, die gleich oder größer als die erforderliche Treiberspannung der ersten Treiberspulenschaltung (LRelais1) ist.

4. Nachrüstbare LED-Beleuchtungsvorrichtung nach einem der vorstehenden Ansprüche, umfassend eine Gleichrichterschaltung, die zwischen der ersten Leistungsverbindung (in1) und der zweiten Leistungsverbindung (in2) und dem ersten Ausgang (LED+) und dem zweiten Ausgang (LED-) gekoppelt ist.

5. Nachrüstbare LED-Beleuchtungsvorrichtung nach Anspruch 4, wobei der erste Relaisschalter (Relais_1a, Relais_1b) zwischen der ersten Leistungsverbindung (in1) und der Gleichrichterschaltung oder zwischen der zweiten Leistungsverbindung (in2) und der Gleichrichterschaltung gekoppelt ist.

6. Nachrüstbare LED-Beleuchtungsvorrichtung nach einem der vorstehenden Ansprüche, wobei das erste Relais (Relais1) einen zweiten Relaisschalter (Relais_1b) umfasst, wobei der erste Relaisschalter (Relais_1a) zwischen der ersten Leistungsverbindung (in1) und der Gleichrichterschaltung gekoppelt ist und der zweite Relaisschalter (Relais_1b) zwischen der zweiten Leistungsverbindung (in2) und der Gleichrichterschaltung gekoppelt ist.

7. Nachrüstbare LED-Beleuchtungsvorrichtung nach einem der vorstehenden Ansprüche, wobei die zweite Treiberspulenschaltung (LRelais2) eine Parallelkombination aus einem zweiten Kondensator (C2) und einem zweiten Widerstand (R2) umfasst.

8. Nachrüstbare LED-Beleuchtungsvorrichtung nach einem der vorstehenden Ansprüche, wobei eine Durchlassspannung des ersten Satzes von einer oder mehreren LEDs (LED1) an eine Treiberspannung der ersten Treiberspulenschaltung (LRelais1) angepasst wird, indem eine Anzahl von LEDs des ersten Satzes von einer oder mehreren LEDs (LED1) bereitgestellt wird, um eine Durchlassspannung bereitzustellen, die gleich oder größer als die Treiberspannung der ersten Treiberspulenschaltung (LRelais1) ist, und wobei eine Durchlassspannung des zweiten Satzes von einer oder mehreren LEDs (LED2) an eine Treiberspannung der zweiten Treiberspulenschaltung (LRelais2) angepasst wird, indem eine Anzahl von LEDs des zweiten Satzes von einer oder mehreren LEDs (LED2) bereitgestellt wird, um eine Durchlassspannung bereitzustellen, die gleich oder größer als die Treiberspannung der zweiten Treiberspulenschaltung (LRelais2) ist.

9. Nachrüstbare LED-Beleuchtungsvorrichtung nach einem der vorstehenden Ansprüche, wobei der erste Relaisschalter (Relais_1a) und der dritte Relaisschalter (Relais_2a) geschlossen werden, wenn ein Vorhandensein einer Spannung und/oder eines Stroms an dem ersten Ende und an dem zweiten Ende erkannt wird.

10. Nachrüstbare LED-Beleuchtungsvorrichtung nach einem der vorstehenden Ansprüche, wobei das erste Relais (Relais1) einen zweiten Relaisschalter (Relais_1b) umfasst, wobei der erste Relaisschalter (Relais_1a) zwischen der ersten Leistungsverbindung (in1) und der LED-Last (2) gekoppelt ist und der zweite Relaisschalter (Relais_1b) zwischen der zweiten Leistungsverbindung (in2) und der LED-Last (2) gekoppelt ist und wobei das zweite Relais (Relais2) einen vierten Relaisschalter (Relais_2b) umfasst, wobei der dritte Relaisschalter (Relais_2a) zwischen der dritten Leistungsverbindung (in3) und der LED-Last (2) gekoppelt ist und der vierte Relaisschalter (Relais_2b) zwischen der vierten Leistungsverbindung (in4) und der LED-Last (2) gekoppelt ist.

11. Nachrüstbare LED-Beleuchtungsvorrichtung nach einem der vorstehenden Ansprüche, wobei der erste Relaisschalter (Relais_1a, Relais_1b) angepasst ist, geschlossen zu werden, wenn ein ordnungsgemäßes Einsetzen der Nachrüstungs-LED-Beleuchtungsvorrichtung in eine nachrüstbare Leuchte erkannt wird.

12. Nachrüstbare LED-Beleuchtungsvorrichtung nach einem der vorstehenden Ansprüche, wobei der erste Satz von einer oder mehreren LEDs (LED1) und/oder der zweite Satz von einer oder mehreren LEDs (Led2) gleichmäßig zwischen dem ersten Ende (1) und dem zweiten Ende (3) verteilt sind.

13. Nachrüstbare LED-Beleuchtungsvorrichtung nach einem der vorstehenden Ansprüche, ferner umfassend einen dritten Satz von einer oder mehreren LEDs (LED3), der zwischen dem ersten Satz von einer oder mehreren LEDs (LED1) und dem zweiten Satz von einer oder mehreren LEDs (LED2) gekoppelt ist, wobei eine LED-Dichte des ersten Satzes von einer oder mehreren LEDs (LED1) höher als eine LED-Dichte des dritten Satzes von einer oder mehreren LEDs (LED3) ist und/oder eine LED-Dichte des zweiten Satzes von einer oder mehreren LEDs (LED2) höher als eine LED-Dichte des dritten Satzes von einer oder mehreren LEDs (LED3) ist.

## Revendications

1. Dispositif d'éclairage à diodes électroluminescente, DEL, installé rétroactivement pour connexion à un ballast fluorescent, dans lequel le dispositif d'éclairage à DEL installé rétroactivement comprend :
- une première extrémité (1) comprenant une première connexion de puissance (in1) et une deuxième connexion de puissance (in2) configurée pour recevoir une puissance de sortie en provenance du ballast fluorescent et comprenant un premier relais (Relay1), dans lequel la première connexion de puissance (in1) et la deuxième connexion de puissance (in2) sont couplées à un premier connecteur unique, dans lequel la première extrémité (1) est conçue pour fournir une première sortie (LED+) et une deuxième sortie (LED-) ;
- une seconde extrémité (3) comprenant une troisième connexion de puissance (in3) et une quatrième connexion de puissance (in4) permettant de recevoir une puissance de sortie du ballast fluorescent et comprenant un second relais (Relay2), dans lequel la troisième connexion de puissance (in3) et la quatrième connexion de puissance (in4) sont couplées à un second connecteur unique, dans lequel la seconde extrémité (3) est conçue pour fournir une troisième sortie (LED+) et une quatrième sortie (LED-), dans lequel la première sortie (LED+) est couplée à la troisième sortie (LED+) et la deuxième sortie (LED-) est couplée à la quatrième sortie (LED-) ;
- une charge de diodes électroluminescentes, DEL (2) comprenant :
- un premier ensemble d'une ou plusieurs DEL (LED1) couplé à la première sortie (LED+) ; et
- un deuxième ensemble d'une ou plusieurs DEL (LED2) couplé à la deuxième sortie (LED-), dans lequel le premier ensemble d'une ou plusieurs DEL (LED1) et le deuxième ensemble d'une ou plusieurs DEL (LED2) sont couplés en série ;
**caractérisé en ce que** le dispositif d'éclairage à DEL installé rétroactivement comprend en outre :
- le premier relais (Relay1) comprenant un premier commutateur relais (relay_1a, relay_1b) et un premier circuit de bobine de pilotage (Lrelay1), dans lequel le premier commutateur relais (relay_1a, relay_1b) est couplé entre la première connexion de puissance (in1) ou la deuxième connexion de puissance (in2) et la charge de DEL (2), et
- le second relais (Relay2) comprenant un troisième commutateur relais (relay_2a, relay_2b) et un second circuit de bobine de pilotage (Lrelay2), dans lequel le troisième commutateur relais (relay_2a, relay_2b) est couplé entre la troisième connexion de puissance (in3) ou la quatrième connexion de puissance (in4) et la charge de DEL (2),
dans lequel le premier circuit de bobine de pilotage (Lrelay1) est couplé électriquement en parallèle au premier ensemble d'une ou plusieurs DEL (LED1) et le second circuit de bobine de pilotage (Lrelay2) est couplé électriquement en parallèle au deuxième ensemble d'une ou plusieurs DEL (LED2).

2. Dispositif d'éclairage à DEL installable rétroactivement selon la revendication 1, dans lequel le premier circuit de bobine de pilotage (Lrelay1) comprend une combinaison parallèle d'un premier condensateur (C1) et d'une première résistance (R1).

3. Dispositif d'éclairage à DEL installable rétroactivement selon l'une quelconque des revendications précédentes, dans lequel une tension directe du premier ensemble d'une ou plusieurs DEL (LED1) est mise en correspondance avec une tension de pilotage requise du premier circuit de bobine de pilotage (Lrelay1) en fournissant une quantité de DEL couplées en série parmi les DEL du premier ensemble d'une ou plusieurs DEL (LED1) pour fournir une tension directe étant égale ou supérieure à la tension de pilotage requise du premier circuit de bobine de pilotage (Lrelay1).

4. Dispositif d'éclairage à DEL installable rétroactivement selon l'une quelconque des revendications précédentes, comprenant un circuit redresseur couplé entre la première connexion de puissance (in1) et la deuxième connexion de puissance (in2) et la première sortie (LED+) et la deuxième sortie (LED-).

5. Dispositif d'éclairage à DEL installable rétroactivement selon la revendication 4, dans lequel le premier commutateur relais (relay_1a, relay_1b) est couplé entre la première connexion de puissance (in1) et le circuit redresseur ou entre la deuxième connexion de puissance (in2) et le circuit redresseur.

6. Dispositif d'éclairage à DEL installable rétroactivement selon l'une quelconque des revendications précédentes, dans lequel le premier relais (Relay1) comprend un deuxième commutateur relais (relay_1b), dans lequel le premier commutateur relais (relay_1a) est couplé entre la première connexion de puissance (in1) et le circuit redresseur et le deuxième commutateur relais (relay_1b) est couplé entre la deuxième connexion de puissance (in2) et le circuit redresseur.

7. Dispositif d'éclairage à DEL installable rétroactivement selon l'une quelconque des revendications précédentes, dans lequel le second circuit de bobine de pilotage (Lrelay2) comprend une combinaison parallèle d'un second condensateur (C2) et d'une seconde résistance (R2).

8. Dispositif d'éclairage à DEL installable rétroactivement selon l'une quelconque des revendications précédentes, dans lequel une tension directe du premier ensemble d'une ou plusieurs DEL (LED1) est mise en correspondance avec une tension de pilotage du premier circuit de bobine de pilotage (Lrelay1) en fournissant une quantité de DEL du premier ensemble d'une ou plusieurs DEL (LED1) pour fournir une tension directe étant égale ou supérieure à la tension de pilotage du premier circuit de bobine de pilotage (Lrelay1) et dans lequel une tension directe du deuxième ensemble d'une ou plusieurs DEL (LED2) est mise en correspondance avec une tension de pilotage du second circuit de bobine de pilotage (Lrelay2) en fournissant une quantité de DEL du deuxième ensemble d'une ou plusieurs DEL (LED2) pour fournir une tension directe étant égale ou supérieure à la tension de pilotage du second circuit de bobine de pilotage (Lrelay2).

9. Dispositif d'éclairage à DEL installable rétroactivement selon l'une quelconque des revendications précédentes, dans lequel le premier commutateur relais (relay_1a) et le troisième commutateur relais (relay_2a) sont fermés à la détection d'une présence d'une tension et/ou d'un courant au niveau de la première extrémité et au niveau de la seconde extrémité.

10. Dispositif d'éclairage à DEL installable rétroactivement selon l'une quelconque des revendications précédentes, dans lequel le premier relais (Relay1) comprend un deuxième commutateur relais (relay_1b), dans lequel le premier commutateur relais (relay_1a) est couplé entre la première connexion de puissance (in1) et la charge de DEL (2) et le deuxième commutateur relais (relay_1b) est couplé entre la deuxième connexion de puissance (in2) et la charge de DEL (2) et dans lequel le second relais (Relay2) comprend un quatrième commutateur relais (relay_2b), dans lequel le troisième commutateur relais (relay_2a) est couplé entre la troisième connexion de puissance (in3) et la charge de DEL (2) et le quatrième commutateur relais (relay_2b) est couplé entre la quatrième connexion de puissance (in4) et la charge de DEL (2).

11. Dispositif d'éclairage à DEL installable rétroactivement selon l'une quelconque des revendications précédentes, dans lequel le premier commutateur relais (relay_1a, relay_1b) est conçu pour être fermé lorsqu'une insertion adéquate du dispositif d'éclairage à DEL installé rétroactivement dans un luminaire installable rétroactivement est détectée.

12. Dispositif d'éclairage à DEL installable rétroactivement selon l'une quelconque des revendications précédentes, dans lequel le premier ensemble d'une ou plusieurs DEL (LED1) et/ou le deuxième ensemble d'une ou plusieurs DEL (Led2) sont uniformément répartis entre la première extrémité (1) et la seconde extrémité (3).

13. Dispositif d'éclairage à DEL installable rétroactivement selon l'une quelconque des revendications précédentes, comprenant en outre un troisième ensemble d'une ou plusieurs DEL (LED3) couplé entre le premier ensemble d'une ou plusieurs DEL (LED1) et le deuxième ensemble d'une ou plusieurs DEL (LED2), dans lequel une densité de DEL du premier ensemble d'une ou plusieurs DEL (LED1) est supérieure à une densité de DEL du troisième ensemble d'une ou plusieurs DEL (LED3) et/ou une densité de DEL du deuxième ensemble d'une ou plusieurs DEL (LED2) est supérieure à une densité de DEL du troisième ensemble d'une ou plusieurs DEL (LED3).
